# EUROPEAN PATENT SPECIFICATION

(11) **EP 4 297 948 B1**
(45) Date of publication and mention of the grant of the patent: **16.04.2025**
(21) Application number: 22708537.0
(22) Date of filing: 24.02.2022
(51) Int. Cl.: B29C 45/14, F28D 9/00, F28F 21/06, B29L 31/18

(54) **PROCESS TO MANUFACTURE AN INTERCONNECTED STACK OF THERMOPLASTIC FRAMES**
VERFAHREN ZUR HERSTELLUNG EINES STAPELS UNTEREINANDER VERBUNDENER RAHMEN
PROCÉDÉ DE LA FABRICATION D'UN TAS DES CADRES INTERCONNECTÉES

(30) Priority: 25.02.2021 NL 2027649
(43) Date of publication of application: 03.01.2024
(73) Proprietor: Dutch Innovation in Air Treatment BV, 7711 GG Nieuwleusen (NL)
(72) Inventor: TRIP, Vincent, 7711 GG Nieuwleusen (NL); VAN DER LEE, Arthur, 7711 GG Nieuwleusen (NL)
(74) Representative: Cramwinckel, Michiel
(86) International application number: PCT/EP2022/054627
(87) International publication number: WO 2022/180151

(56) References cited:
- EP-A1- 2 068 107
- EP-A2- 2 614 764
- US-A1- 2018 266 774
- US-A1- 2020 124 359

## Description

The invention is directed to a process to manufacture an interconnected stack of thermoplastic frames having two sides. The stack may be used as part of a plate heat exchanger.

Such a process is described in EP2068107. This patent publication describes a process wherein first resin frames are made by injection moulding. A heat exchange sheet is combined with the frame and the resulting frames are stacked. The frames are connected to each other by ultrasonic melting the corners of the frame. When the molten resin solidifies a bond between the frames results.

US2018/0266774 and WO2018/132014 describe a heat exchange frame which is obtained as an insert moulded work product. The heat exchange frames are connected by means of a snap-fit connection to obtain a stack of interconnected frames.

A problem of the stacking processes for the thermoplastic frames is the strength of the resulting stack when snap fit connections are used. The ultrasonic melting is disadvantageous because it is a laborious process when connecting multiple frames into one stack.

The object of the present invention is to provide a process to manufacture an interconnected stack of thermoplastic frames which does not have the problems of the prior art processes.

This object is achieved by the following process. Process to manufacture an interconnected stack of thermoplastic frames having two sides by
stacking the thermoplastic frames to obtain a stack of frames such that the facing sides of two neighbouring frames are in contact with each other at a contact area,
wherein as a result of stacking the frames and as a result of at least one opening present in the frame at least one longitudinal conduit is formed which runs along the length of the stack,
wherein as a result of stacking the frames and as a result of a elongated gutter as present on or in at least one side of the frame at the contact area a branched conduit is formed at the contact area, which branched conduit is fluidly connected to the longitudinal conduit, and
wherein a pressurised melt of a plastic material is supplied to the elongated conduit and branched conduits while the stack is held together by external means to obtain the interconnected stack of thermoplastic frames.

Applicants have found that a stack of firmly connected frames are obtained by this process. At the contact area fusion bonding between the material of neighbouring frames occurs. The plastic melt thereby mixes with the fusion surfaces of the frames resulting in a strong bond. This bond is stronger than the aforementioned snap fit connections. A further advantage is that these bonds are water tight which is not always the case when using a snap fit connection. By performing one action, namely supplying the pressurised melt of a plastic material, a multitude of frames can be connected simultaneously. This in contrast with the prior art ultra sonic welding method which requires to connect each individual frame to a growing stack.

A further advantage is that the frames are connected in a water tight manner. This is especially advantageous when the stack is used as part of an evaporator plate heat exchanger. The process allows one to make a stack having a water compartment from which water can be added to the spaces where evaporation takes place while no water leaks into the spaces between the frames where no evaporation is supposed to take place. Such a design allows one to supply pressurised water to such compartments without the risk that the afore mentioned leaking occurs.

The invention is also directed to an interconnected stack of thermoplastic frames having two sides wherein the facing sides of two neighbouring frames are connected by fusion bonding at a contact area as defined by the subject matter of independent claim 11.

The thermoplastic frames may be polypropylene frames, polyethylene frames or polyamide frames. Preferably the frames are obtained by injection moulding. When the stack is used as a plate heat exchanger where water evaporates in one of the gas flow channels it is advantageous that the frames are polypropylene frames.

The injected moulded frames may comprise a surface at which heat exchange takes place wherein this surface is part of the injected moulded work product and made of the same thermoplastic material. Preferably the surface is a heat exchange sheet which may be combined with the frame after injection moulding as described in the aforementioned EP2068107. Preferably the frames are insert moulded work products, also referred to as over moulding, comprising an insert consisting of a heat exchange sheet. The heat exchange sheet may be a paper sheet, a plastic sheet or preferably metal sheet. The metal sheet is preferably an aluminium sheet. Examples of such insert moulding or over moulding are described in the afore mentioned US2018/0266774 and WO2018/132014.

The frame may have a square, rectangular, rhombic or a hexagonal shape. Preferably it has a hexagonal shape resulting in that the stack has six sides and even more preferably it has a square shape or a rectangular shape in that the stack has four sides.

The frame will be provided with one opening present in the frame which will form a longitudinal conduit. The longitudinal conduit will run along the length of the stack. In order to minimise the required length of the branched conduit or conduits it is preferred to form more than one longitudinal conduit when stacking. Thus it is preferred that the frame is provided with more than one opening which will form a longitudinal conduit.

Preferably at least two longitudinal conduits are formed as a result of stacking the frames and wherein the at least two longitudinal conduits are not fluidly connected to each other and wherein the two elongated conduits are each fluidly connected to separate branched conduits.

For example for a frame having a square shape or a rectangular shape it may be preferred to have openings in the frame at the respective four corners of the frame. Thus such a square shape or a rectangular shaped frame suitably has at least four openings.

At both ends of the stack an inlet will be present as the end of each longitudinal conduit. To avoid that the pressurised melt enters the stack at one end and leaves the stack at the opposite end it is preferred that one opening of a longitudinal conduit is closed. This closing of this one opening may be achieved by the external means for holding the stack together. For example the stack may be held between two plates exerting a counter force on the stack when the pressurised melt is supplied thereby avoiding that the frames separate from each other. By providing one plate with openings which align with the inlet of a longitudinal conduit and the opposite plate without such openings a system is achieved where the longitudinal conduit and its branch conduits form a dead end system to which the pressurised melt can only be supplied and not escape.

The shape and dimensions of the longitudinal conduits and the branches are such that the melt of the plastic material can fill the entire system. Such a shape and design may be obtained using the well known design rules for designing an injection mould for such a melt of the plastic material.

The external means to hold the stack together may thus be the above described two plates between which the stack is positioned. Preferably the external means is an open container in which the stack can be positioned having the two walls described above. In addition the sides and bottom of the stack may be supported by the container. More preferably a closed container is used which allows a support of all the sides of the stack. This is advantageous because the supply of the pressurised melt may also result in that the sides of the stack want to expand and such a support avoids that the melt of the plastic material leaks from the stack. By having external walls present to counteract this expansion the shape of the stack can be maintained.

More preferably the container has an open position and a closed position, has an interior shape which is the form negative of the interconnected stack when in the closed position and wherein the container allows positioning of the stack of thermoplastic frames and removing of the interconnected stack of thermoplastic frames when in the open position and wherein the container is provided with an inlet for the pressurised melt of a plastic and which inlet is fluidly connected to the longitudinal conduit when the container is in a closed position. Such a container may be a plastic and preferably a metal container. The container may be made by well known additive or subtractive manufacturing methods.

The shape of the stack may also include any added chamber or chambers added to a side of the stack. Suitably the upper side and bottom side may be provided with a chamber to supply water and collect water from part of the spaces between the heat exchanger frames of the stack. These chambers may be formed by adding a single plastic part to the upper and bottom side of the stack. This part is open to the upper side and the other part is open to the bottom side. The added chambers may be gas headers for the gasses which exchange heat and/or chamber to supply water or collect water from part of the spaces between the frames. This part may be an injected moulded part. Preferably the part is made from the same thermoplastic material as the frames. Preferably the added part or parts are connected to the stack by supplying the melt of a plastic material to the container and preferably such that the added part connects to the stack. When manufacturing a stack having the added external parts it is preferred that the container having the open position and closed position has an interior shape which is the form negative of the interconnected stack and the one or two added parts. The flow path of the melt will then be such that it connects the sides of the added part to a side of the stack. The melt of the plastic is preferably simultaneously supplied to this contact area and to the longitudinal conduit or conduits. The frames may for example be provided with two indentations which form two parallel longitudinal gutters at one side of the stack as a result of stacking the frames. These gutters are designed such that they allow the sides of the part to enter the gutter and allow a flow of the melt of a plastic material. In this way the part can be placed in a fixed position on one or both upper and lower side of the stack and connected to the stack in the process according to this invention.

This container may be made of metal and be manufactured by subtractive machining. Alternatively the container may be manufactured by additive manufacturing techniques from various materials including metals and plastics. This container, also referred to as a mould, can be designed for a certain fixed number of frames in the stack. This mould thus allows to manufacture multiple stacks of uniform size in a simple and quick process. Preferably stacks having a number of frames between 15 and 50 are made by this process.

The frame is further provided with an elongated gutter as present on or in at least one side of the frame at the contact area. This elongated gutter will form a branched conduit at the contact area when the frames are stacked. Suitably the contact area of the neighbouring frame which faces the gutter is flat. In this way a conduit will be formed when the open end of the gutter is placed against this surface. The frame is designed such that these resulting branched conduits are fluidly connected to the elongated conduits. By supplying the pressurised melt of a plastic material to the elongated conduit and branched conduits while the stack is held together by external means the interconnected stack of thermoplastic frames is obtained.

The melt of a plastic material is suitably a material which is compatible with the thermoplastic material of the frame. In this way the material of the two facing contact surfaces of the neighbouring frames will fuse together with the melt of the plastic material resulting in a strong connection between the frames. Further the melt of the plastic material should have flow properties enabling the melt to enter the longitudinal conduits and its branched conduits. Thus frames having a large dimension and larger dimensioned longitudinal conduits and branched conduits may use a more viscous melt of a plastic compared to when a smaller dimensioned frames are used for the stack. The melt of a plastic material is preferably a melt of a thermoplastic elastomer. An example of a suited combination for a polypropylene frame is a melt of a Styrene Ethylene Butylene Styrene Block Copolymer.

The invention is therefore also directed to an interconnected stack of thermoplastic frames having two sides wherein the facing sides of two neighbouring frames are connected by fusion bonding at a contact area, wherein the frames are polypropylene frames and the insert is an aluminium sheet and wherein the fusion bonding is obtainable by pressing the facing sides of the neighbouring frames in the presence of a pressurised melt of a thermoplastic elastomer and preferably a Styrene Ethylene Butylene Styrene Block Copolymer.

The stack of interconnected frames as described above and obtained by the process described above is suitably used as part of a plate heat exchanger. The plate heat exchangers may be used in the process described in WO2016/206714.

The invention will be illustrated by the following Figures.

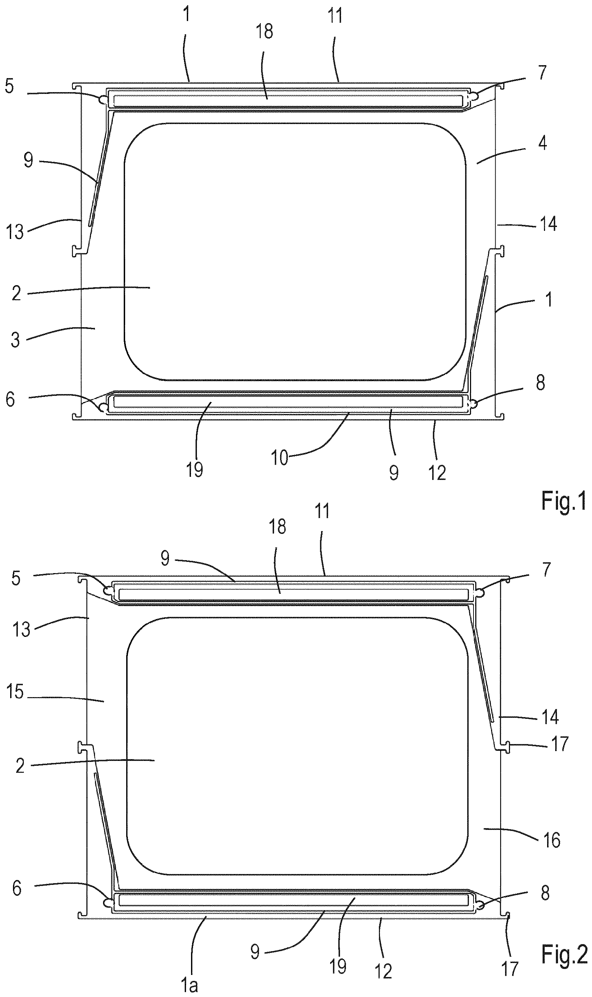

Figure 1 shows a frame (1) provided with an aluminium sheet (2) as an insert moulded work product. The design of the frame shows an inlet (3) for a first gas flow and an outlet (4) for the first gas flow. The frame (1) is further provided with four openings (5,6,7,8) which will form the longitudinal conduit when the frames are stacked. The frame is further provided with a system (9) of gutters as formed by ridges (10) which extend upwards for the viewer of this figure from the plane of sheet (2). For a frame having a height and width of 35x38 cm the ridges (10) may extend 3 mm. The opposite side of the frame which is not visible in Figure 1 is flat. When the frame (1) is covered by a flat lower side of a frame (1a) as shown in Figure 2 the gutters form the branched conduits. The dimensions of these gutters may have a cross-sectional area of between 5 and 20 mm². Between the system (9) of ridges (10) and the openings (5,6,7,8) a fluid connection is present as shown. This results in that when a stack is formed the longitudinal conduits are fluidly connected to the branched conduits. The stack is suitably used in a horizontal position. The sides of the stack and the sides of the frames (1,1a) are therefore referred to as the upper side (11), lower side (12) and sides (13,14).

Figures 1 and 2 also shows an opening (18) which will not be filled with the melt of plastic material. In the interconnected stack a space for water will then be present which runs along upper side (11). By providing an inlet (not shown) to this space for water and by providing openings (not shown) to certain spaces between frames (1) and (1a) an evaporating plate heat exchanger may be obtained. The water from this space is fed to these spaces where it may evaporate. At the lower side an opening (19) may be present which is also not filled with the melt of plastic material. This space may be used to collect any not evaporated water from the above spaces. Openings (not shown) will then be present to allow water to enter these lower space running along lower side (12). A discharge for collected water (not shown) is present to discharge this water.

Figure 2 shows a frame (1a). This frame is as frame (1) except that the shows an inlet (15) for a second gas flow and an outlet (16) for the second gas flow. When frames (1) and frames (1a) are stacked in an alternating order a row of inlets (3) will be present at one side in the lower half and a row of outlets (15) will be present at the same side (13) in the upper half of this side (13). This allows one to attach a header for supplying the first gas to the lower side of the stack and attach a header for collecting the second gas flow at the upper side of the stack making use of ridges (17).

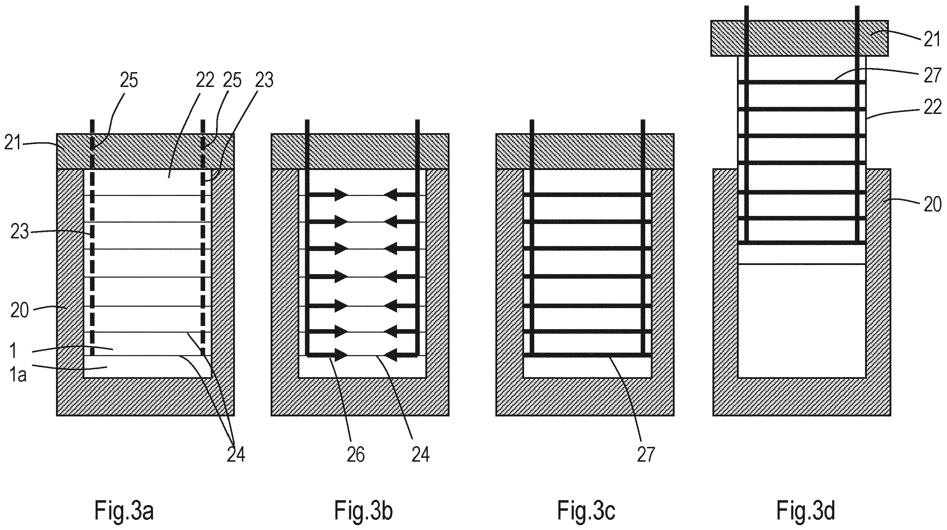

Figures 3a-3d illustrate the process according to this invention. Figure 3a shows a mould (20) and a cover (21) enclosing the mould (20) as the container in a closed position. In the mould (20) a stack (22) of eight frames (1,1a) are placed. The inner shape of mould (20) just allows positioning stack (22) in the mould. The thickness of the frames is not to scale. For clarity reasons a thicker frame is drawn such that the invention can be better illustrated. The stack (22) comprises four longitudinal conduits (23) of which two are shown. These conduits are formed by openings (5,6,7,8) in the frames (1,1a). The cover (21) is provided with four inlets (25) for the pressurised melt of a plastic. These inlets (25) are fluidly connected to the longitudinal conduits (23) as shown. The longitudinal conduits (23) are connected to the branched conduits (24) as schematically shown.

In Figure 3b a melt of a plastic is supplied via the inlets (25) to the longitudinal conduits (23) of the stack (22) of Figure 3a. At the contact surface between two neighbouring frames (1,1a) the melt flows from the individual longitudinal conduits (23) via the branched conduits (24) as illustrated by the smaller arrows (26). The supply of the melt of the plastic stops when all of the branched conduits are filled with the melt (27) as shown in Figure 3c. After solidification of the melt the connected stack (22) is removed from the mould (20) by lifting the cover (21). The connected stack (22) is connected to the cover (21) by means of the solidified plastic in the inlets (25) forming one mass with the solidified plastic in the longitudinal conduits (23). By simply cutting this connection a connected stack (22) is obtained and the cover (21), after cleaning, and the mould (20) can be reused to make the next stack having the same shape.

## Claims

1. Process to manufacture an interconnected stack of thermoplastic frames (1) having two sides by
stacking the thermoplastic frames (1,1a) to obtain a stack (22) of frames (1) such that the facing sides of two neighbouring frames (1,1a) are in contact with each other at a contact area,
wherein as a result of stacking the frames (1,1a) and as a result of at least one opening (5,6,7,8) present in the frame (1,1a) at least one longitudinal conduit (23) is formed which runs along the length of the stack (22),
wherein as a result of stacking the frames (1,1a) and as a result of an elongated gutter as present on or in at least one side of the frame at the contact area a branched conduit (24) is formed at the contact area, which branched conduit (24) is fluidly connected to the longitudinal conduit (23), and
wherein a pressurised melt of a plastic material is supplied to the elongated conduit (23) and branched conduits (24) while the stack (22) is held together by external means (20) to obtain the interconnected stack (22) of thermoplastic frames.

2. Process according to claim 1, wherein the melt of a plastic material is a melt of a thermoplastic elastomer.

3. Process according to any one of claims 1-2, wherein the thermoplastic frames (1,1a) are polypropylene frames, polyethylene frames or polyamide frames.

4. Process according to any one of claims 1-3, wherein the frames (1,1a) are obtained by injection moulding.

5. Process according to claim 4, wherein the frames (1,1a) are insert moulded work products comprising an insert consisting of a heat transfer sheet.

6. Process according to claim 5, wherein the frames (1,1a) are polypropylene frames and the insert is an aluminium sheet and wherein the pressurised melt of a plastic is a pressurised melt of a Styrene Ethylene Butylene Styrene Block Copolymer.

7. Process according to any one of claims 1-6, wherein at least two longitudinal conduits (23) are formed as a result of stacking the frames and wherein the at least two longitudinal conduits (23) are not fluidly connected to each other and wherein the two elongated conduits (23) are each fluidly connected to separate branched conduits (24).

8. Process according to any one of claims 1-7, wherein the external means is a container (20) having an open position and a closed position, has an interior shape which is the form negative of the interconnected stack (22) when in the closed position and wherein the container allows positioning of the stack (22) of thermoplastic frames and removing of the interconnected stack (22) of thermoplastic frames when in the open position and wherein the container (20) is provided with at least one inlet (25) for the pressurised melt of a plastic and which at least one inlet (25) is fluidly connected to the at least one longitudinal conduit (23) when the container is in a closed position.

9. Process according to claim 8, wherein to the stack (22) an added chamber is added to obtain a stack (22) with the added chamber and wherein the container has an interior shape which is the form negative of the interconnected stack with the added chamber and wherein the added part is connected to the stack by the melt of a plastic material as supplied to the container.

10. Process according to any one of claims 1-9, wherein the stack of interconnected frames (22) is suited to be part of a plate heat exchanger.

11. Interconnected stack (22) of thermoplastic frames (1,1a) having two sides wherein the facing sides of two neighbouring frames are connected by fusion bonding at a contact area and obtained by the process in accordance with any of the preceding claims.

12. Interconnected stack of thermoplastic frames according to claim 11, wherein the thermoplastic elastomer is a styrene ethylene butylene styrene block copolymer.

13. Interconnected stack according to any one of claims 11-12, wherein the thermoplastic frames (1,1a) are polypropylene frames, polyethylene frames or polyamide frames.

14. Interconnected stack according to any one of claims 11-13, wherein the heat exchange sheet is a metal sheet.

15. Interconnected stack according to claim 14, wherein the thermoplastic frames (1,1a) are polypropylene frames and the heat exchange sheet is an aluminium sheet.

16. Interconnected stack according to any one of claims 11-15, wherein an added chamber is connected to a side of the stack.

17. Interconnected stack according to claim 16, wherein the added chamber is an injected moulded part made from the same thermoplastic material as the frames and connected to the side of the stack by fusion bonding.

18. Interconnected stack according to any one of claims 14-17 as part of a plate heat exchanger.

## Patentansprüche

1. Verfahren, um einen untereinander verbundenen Stapel aus thermoplastischen Rahmen (1) herzustellen, aufweisend zwei Seiten, durch
Stapeln der thermoplastischen Rahmen (1,1a), um einen Stapel (22) aus Rahmen (1) zu erhalten, sodass die einander zugewandten Seiten von zwei benachbarten Rahmen (1,1a) an einer Kontaktfläche miteinander in Kontakt stehen,
wobei aufgrund des Stapelns der Rahmen (1,1a) und aufgrund dessen, dass mindestens eine Öffnung (5,6,7,8) in dem Rahmen (1,1a) vorhanden ist, mindestens eine Längsleitung (23) ausgebildet wird, die entlang der Länge des Stapels (22) verläuft,
wobei aufgrund des Stapelns der Rahmen (1,1a) und aufgrund einer an oder in mindestens einer Seite des Rahmens an der Kontaktfläche vorhandenen länglichen Rinne, eine verzweigte Leitung (24) an der Kontaktfläche ausgebildet wird, wobei die verzweigte Leitung (24) mit der Längsleitung (23) fluidisch verbunden ist und wobei eine unter Druck stehende Schmelze eines Kunststoffmaterials der länglichen Leitung (23) und den verzweigten Leitungen (24) zugeführt wird, während der Stapel (22) durch ein externes Mittel (20) zusammengehalten wird, um den untereinander verbundenen Stapel (22) aus thermoplastischen Rahmen zu erhalten.

2. Verfahren nach Anspruch 1, wobei die Schmelze eines Kunststoffmaterials eine Schmelze eines thermoplastischen Elastomers ist.

3. Verfahren nach einem der Ansprüche 1 bis 2, wobei die thermoplastischen Rahmen (1,1a) Polypropylenrahmen, Polyethylenrahmen oder Polyamidrahmen sind.

4. Verfahren nach einem der Ansprüche 1 bis 3, wobei die Rahmen (1,1a) durch Spritzgießen erhalten werden.

5. Verfahren nach Anspruch 4, wobei die Rahmen (1,1a) einsatzgegossene Arbeitsprodukte sind, umfassend einen Einsatz, bestehend aus einem Wärmeübertragungsblech.

6. Verfahren nach Anspruch 5, wobei die Rahmen (1,1a) Polypropylenrahmen sind und der Einsatz ein Aluminiumblech ist und wobei die unter Druck stehende Schmelze eines Kunststoffs eine unter Druck stehende Schmelze eines Styrol-Ethylen-Butylen-Styrol-Blockcopolymers ist.

7. Verfahren nach einem der Ansprüche 1 bis 6, wobei mindestens zwei Längsleitungen (23) aufgrund des Stapelns der Rahmen ausgebildet werden und wobei die mindestens zwei Längsleitungen (23) nicht fluidisch miteinander verbunden sind und wobei die zwei länglichen Leitungen (23) jeweils mit separaten verzweigten Leitungen (24) fluidisch verbunden sind.

8. Verfahren nach einem der Ansprüche 1 bis 7, wobei das externe Mittel ein Behälter (20) ist, aufweisend eine offene und eine geschlossen Position, der eine Innengestalt aufweist, die das Formnegativ des untereinander verbundenen Stapels (22) ist, wenn er sich in der geschlossenen Position befindet, und wobei der Behälter ein Positionieren des Stapels (22) aus thermoplastischen Rahmen und ein Entfernen des untereinander verbundenen Stapels (22) aus thermoplastischen Rahmen ermöglicht, wenn er sich in der offenen Position befindet, und wobei der Behälter (20) mit mindestens einem Einlass (25) für die unter Druck stehende Schmelze eines Kunststoffs versehen ist und wobei mindestens ein Einlass (25) mit der mindestens einen Längsleitung (23) fluidisch verbunden ist, wenn sich der Behälter in einer geschlossenen Position befindet.

9. Verfahren nach Anspruch 8, wobei dem Stapel (22) eine zusätzliche Kammer hinzugefügt wird, um einen Stapel (22) mit der zusätzlichen Kammer zu erhalten, und wobei der Behälter eine Innengestalt aufweist, die das Formnegativ des untereinander verbundenen Stapels mit der zusätzlichen Kammer ist, und wobei das zusätzliche Teil durch die Schmelze eines dem Behälter zugeführten Kunststoffmaterials mit dem Stapel verbunden wird.

10. Untereinander verbundener Stapel nach einem der Ansprüche 1 bis 9, wobei der Stapel aus untereinander verbundenen Rahmen (22) geeignet ist, um ein Teil eines Plattenwärmetauschers zu sein.

11. Untereinander verbundener Stapel (22) aus thermoplastischen Rahmen (1,1a), aufweisend zwei Seiten, wobei die einander zugewandten Seiten von zwei benachbarten Rahmen durch Fusionsbonden an einer Kontaktfläche verbunden und durch das Verfahren nach einem der vorstehenden Ansprüche erhalten werden.

12. Untereinander verbundener Stapel aus thermoplastischen Rahmen nach Anspruch 11, wobei das thermoplastische Elastomer ein Styrol-Ethylen-Butylen-Styrol-Blockcopolymer ist.

13. Untereinander verbundener Stapel nach einem der Ansprüche 11 bis 12, wobei die thermoplastischen Rahmen (1,1a) Polypropylenrahmen, Polyethylenrahmen oder Polyamidrahmen sind.

14. Untereinander verbundener Stapel nach einem der Ansprüche 11 bis 13, wobei das Wärmeaustauschblech ein Metallblech ist.

15. Untereinander verbundener Stapel nach Anspruch 14, wobei die thermoplastischen Rahmen (1,1a) Polypropylenrahmen sind und das Wärmeaustauschblech ein Aluminiumblech ist.

16. Untereinander verbundener Stapel nach einem der Ansprüche 11 bis 15, wobei eine zusätzliche Kammer mit einer Seite des Stapels verbunden ist.

17. Untereinander verbundener Stapel nach Anspruch 16, wobei die zusätzliche Kammer ein spritzgegossenes Teil ist, das aus dem gleichen thermoplastischen Material wie die Rahmen hergestellt und durch Fusionsbonden mit der Seite des Stapels verbunden ist.

18. Untereinander verbundener Stapel nach einem der Ansprüche 14 bis 17 als Teil eines Plattenwärmetauschers.

## Revendications

1. Procédé de fabrication d'un empilement interrelié de cadres (1) thermoplastiques ayant deux côtés par
empilement des cadres (1, 1a) thermoplastiques afin d'obtenir un empilement (22) de cadres (1) de sorte que les côtés en regard de deux cadres (1, 1a) voisins sont en contact l'un avec l'autre au niveau d'une zone de contact,
dans lequel, en raison de l'empilement des cadres (1, 1a) et en raison de la présence d'au moins une ouverture (5, 6, 7, 8) dans le cadre (1, 1a), au moins un conduit longitudinal (23) est formé qui s'étend sur la longueur de l'empilement (22),
dans lequel, en raison de l'empilement des cadres (1, 1a) et en raison de la présence d'une goulotte allongée sur ou dans au moins un côté du cadre au niveau de la zone de contact, un conduit ramifié (24) est formé au niveau de la zone de contact, le conduit ramifié (24) est relié fluidiquement au conduit longitudinal (23),
et dans lequel une masse fondue sous pression d'une matière plastique est fournie au conduit allongé (23) et aux conduits ramifiés (24) tandis que l'empilement (22) est maintenu ensemble par un moyen externe (20) afin d'obtenir l'empilement (22) interrelié de cadres thermoplastiques.

2. Procédé selon la revendication 1, dans lequel la masse fondue d'une matière plastique est une masse fondue d'un élastomère thermoplastique.

3. Procédé selon l'une quelconque des revendications 1 à 2, dans lequel les cadres (1, 1a) thermoplastiques sont des cadres en polypropylène, des cadres en polyéthylène ou des cadres en polyamide.

4. Procédé selon l'une quelconque des revendications 1 à 3, dans lequel les cadres (1, 1a) sont obtenus par moulage par injection.

5. Procédé selon la revendication 4, dans lequel les cadres (1, 1a) sont des produits de travail moulés par insertion comprenant un insert constitué d'une feuille de transfert thermique.

6. Procédé selon la revendication 5, dans lequel les cadres (1, 1a) sont des cadres en polypropylène et l'insert est une feuille d'aluminium et dans lequel la masse fondue sous pression d'un plastique est une masse fondue sous pression d'un Copolymère bloc de styrène-éthylène-butylène-styrène.

7. Procédé selon l'une quelconque des revendications 1 à 6, dans lequel au moins deux conduits longitudinaux (23) sont formés en raison de l'empilement des cadres et dans lequel les au moins deux conduits longitudinaux (23) ne sont pas reliés fluidiquement l'un à l'autre et dans lequel les deux conduits allongés (23) sont chacun reliés fluidiquement à des conduits ramifiés (24) séparés.

8. Procédé selon l'une quelconque des revendications 1 à 7, dans lequel le moyen externe est un récipient (20) ayant une position ouverte et une position fermée, a une forme intérieure qui est la forme négative de l'empilement (22) interrelié lorsqu'il se trouve dans la position fermée et dans lequel le récipient permet de positionner l'empilement (22) de cadres thermoplastiques et de retirer l'empilement (22) interrelié de cadres thermoplastiques lorsqu'il se trouve dans la position ouverte et dans lequel le récipient (20) est pourvu d'au moins une entrée (25) pour la masse fondue sous pression d'un plastique et au moins une entrée (25) est reliée fluidiquement à l'au moins un conduit longitudinal (23) lorsque le récipient se trouve dans une position fermée.

9. Procédé selon la revendication 8, dans lequel une chambre ajoutée est ajoutée à l'empilement (22) afin d'obtenir un empilement (22) avec la chambre ajoutée et dans lequel le récipient a une forme intérieure qui est la forme négative de l'empilement interrelié avec la chambre ajoutée et dans lequel la partie ajoutée est reliée à l'empilement par la masse fondue d'une matière plastique telle que fournie au récipient.

10. Procédé selon l'une quelconque des revendications 1 à 9, dans lequel l'empilement (22) de cadres interreliés est adaptée pour faire partie d'un échangeur thermique à plaques.

11. Empilement (22) interrelié de cadres (1, 1a) thermoplastiques ayant deux côtés, dans lequel les côtés en regard de deux cadres voisins sont reliées par liaison par fusion au niveau d'une zone de contact et obtenus par le procédé selon l'une quelconque des revendications précédentes.

12. Empilement interrelié de cadres thermoplastiques selon la revendication 11, dans lequel l'élastomère thermoplastique est un copolymère bloc de styrène-éthylène-butylène-styrène.

13. Empilement interrelié selon l'une quelconque des revendications 11 à 12, dans lequel les cadres (1, 1a) thermoplastiques sont des cadres en polypropylène, des cadres en polyéthylène ou des cadres en polyamide.

14. Empilement interrelié selon l'une quelconque des revendications 11 à 13, dans lequel la feuille d'échange thermique est une feuille de métal.

15. Empilement interrelié selon la revendication 14, dans lequel les cadres (1, 1a) thermoplastiques sont des cadres en polypropylène et la feuille d'échange thermique est une feuille d'aluminium.

16. Empilement interrelié selon l'une quelconque des revendications 11 à 15, dans lequel une chambre ajoutée est reliée à un côté de l'empilement.

17. Empilement interrelié selon la revendication 16, dans lequel la chambre ajoutée est une pièce moulée par injection faite de la même matière plastique que les cadres et reliée au côté de l'empilement par liaison par fusion.

18. Empilement interrelié selon l'une quelconque des revendications 14 à 17 en tant que partie d'un échangeur thermique à plaques.
